# EUROPÄISCHE PATENTSCHRIFT

(11) **EP 1 235 701 B1**
(45) Veröffentlichungstag und Bekanntmachung des Hinweises auf die Patenterteilung: **25.02.2004**
(21) Anmeldenummer: 00987348.0
(22) Anmeldetag: 05.12.2000
(51) Int. Cl.: B60R 11/02, H01Q 1/32

(54) **DACHMODUL**
ROOF MODULE
MODULE DE TOIT

(30) Priorität: 06.12.1999 DE 19958605
(43) Veröffentlichungstag der Anmeldung: 04.09.2002
(73) Patentinhaber: Webasto Vehicle Systems International GmbH, 82131 Stockdorf (DE)
(72) Erfinder: SEIFERT, Wolfgang, 82110 Germering (DE); HAHN, Ferdinand, 86911 Diessen (DE); KLESING, Joachim, 80992 München (DE)
(74) Vertreter: Wiese, Gerhard
(86) Internationale Anmeldenummer: PCT/EP2000/012182
(87) Internationale Veröffentlichungsnummer: WO 2001/042051

(56) Entgegenhaltungen:
- EP-A- 0 261 762
- EP-A- 0 278 069
- EP-A- 0 872 384
- US-A- 5 402 134
- US-A- 5 532 709

## Beschreibung

Die Erfindung betrifft ein Dachmodul eines Fahrzeugdaches mit einer Dachaussenhaut und einem Himmel.

Bei Fahrzeugen, insbesondere Kraftfahrzeugen wie PKW, werden Antennen für Mobilfunk (GSM) oder Navigationssysteme (GPS) üblicherweise als eigenständige Baugruppen auf der Dachhaut montiert. Um Antennen vor Beschädigung zu schützen, werden Antennensysteme für Autoradios in Fahrzeugscheiben (Frontscheibe, Heckscheibe) integriert. In Fahrzeugscheiben integrierte Antennen sind jedoch nur für einen Frequenzbereich von unter 800 MHz einsetzbar, da aufgrund der dielektrischen Eigenschaften von Glas der Wirkungsgrad der Antenne soweit reduziert ist, daß ein störungsfreier Betrieb von Mobilfunk (GSM) oder Navigationssystemen (GPS) nicht möglich ist.

Aus der gattungsgemässen EP 0 278 069 A1 ist ein Fahrzeugdach mit einer in die Dachstruktur integrierten Antenne bekannt. Bei dieser ist eine Antenne zwischen einer äußeren Dachplatte aus nicht leitenden Material wie Kunststoff und einer inneren Himmelplatte angeordnet. Für die Anbringung einer derartigen Antenne ist ein erhöhter Montageaufwand notwendig.

Aufgabe der Erfindung ist es, ein eingangs genanntes Dachmodul zu schaffen, das zur einfachen Integration einer Antenneneinrichtung geeignet ist.

Diese Aufgabe wird bei dem oben genannten Dachmodul erfindungsgemäß durch die Merkmale des Anspruchs 1 gelöst, daß zumindest eine Antenne, insbesondere für Mobilfunk und/oder für Satellitennavigation, zwischen der Dachaußenhaut und dem Himmel in einer Schaumstoffschicht an der Innenseite der Dachaußenhaut angeordnet ist. Durch das unmittelbare Einschäumen der Antenne in die Schaumstoffschicht an der Innenseite der Dachaußenhaut müssen für diese keinerlei Halterungen vorgesehen sein. Die Antenne ist ferner vor Beschädigungen sehr gut geschützt, wobei das Kunststoffmaterial die Antennenleistung kaum beeinträchtigt. Dabei kann eine einzige Antenne für Mobilfunk und Satellitenkommunikation sowie optional zusätzlich auf für Radioempfang vorgesehen sein. Die Signale für diese zwei oder drei unterschiedlichen Systeme werden mittels einer Frequenzweiche separiert. Enthält das Dachmodul zumindest zwei Antennen, so können diese Einzelantennen für den jeweiligen Empfangszweck angepaßt und spezialisiert sein. Durch die Abdeckung der Antenne mittels eines Kunststoffes anstelle einer Glasscheibe mit ihren nachteiligen dielektrischen Eigenschaften ist das Empfangsverhalten der Antenne insbesondere für Mobilfunk und für Satellitennavigation wesentlich verbessert. Die Antenne oder die Antennen kann bzw. können in dem Dachmodul von Störsignale aussendenden Komponenten, z. B. Hochstromverbaucher wie Heckscheibenmotor oder Heckscheibenheizung, weit beabstandet angeordnet werden.

Vorteilhafte Ausgestaltungen der Erfindung sind in den Unteransprüchen angegeben.

In einer bevorzugten Ausführungsform ist die Antenne aus einem Antennendraht oder einer FPC-Verdrahtung gebildet

In einer besonders bevorzugten Ausgestaltung ist eine Dachmodulsteuereinheit im Dachmodul integriert. Die Dachmodulsteuereinheit ist eine zentrale Schalt- und Schnittstelle zur Informations- und Leistungsverteilung von im Dachmodul integrierten Komponenten wie Antennen und anderen elektrischen/elektronischen Komponenten. Zweckmäßigerweise enthält die Dachmodulsteuereinheit einen Antennenverstärker, wobei insbesondere in diesem Fall die Dachmodulsteuereinheit zum Minimieren der Länge von störungsempfindlichen Hochfrequenzleitungen nahe benachbart zu der oder zu den Antennen im Dachmodul integriert ist. Die Zusammenfassung der Steuerelektronik in der Dachmodulsteuereinheit ermöglicht eine kostengünstige Fertigung und Montage.

Zweckmäßigerweise erfolgt eine Datenübertragung von der Antenne und zu der Antenne über ein Datenbussystem, z. B. einen LIN-Bus, des Fahrzeugs, wobei die Informationen von/zu der Antenne in einer Dachelektronik wie z. B. in der Dachmodulsteuereinheit decodiert/codiert und über das Datenbussystem weitergegeben werden.

Bevorzugt ist ein Zentralstecker zur Verbindung der Daten- und Stromversorgung des Dachmoduls mit dem Datenbussystem und einer Fahrzeugstromversorgung vorgesehen. Damit muß beim Einbau des Dachmoduls lediglich eine Steckverbindung hergestellt werden, so daß die Montage vereinfacht ist.

Ein wesentlicher Vorteil des vorgefertigten Dachmoduls liegt darin, daß das Dachmodul zusätzliche elektrische/elektronische Komponenten enthalten kann, die über den Zentralstecker an das Datenbussystem angeschlossen sind.

Am Dachmodul können zwei oder mehrere Antennen integriert sein, z. B. eine Antenne für GPS und ein Antenne für GSM, wobei z. B. eine Antenne an der Dachaußenhaut und eine Antenne am Himmel oder auch in anderen Anordnungsvarianten angebracht sein kann.

Das Dachmodul kann ein Dachöffnungssystem, insbesondere ein Schiebedach, enthalten.

Neben den Antennen für GPS und GSM kann zusätzlich eine Radioantenne an dem Dachmodul integriert sein.

Ein wesentlicher Vorteil des Dachmoduls besteht darin, daß es als vorgefertigte, komplettierte Baueinheit an einem Dachrahmen des Fahrzeugs befestigt werden kann.

Nachfolgend werden Ausführungsbeispiele des Dachmoduls unter Bezugnahme auf Zeichnungen näher erläutert. Es zeigt:
- Fig. 1: in einer perspektivischen Ansicht in schematischer Darstellung ein Dachmodul eines Fahrzeugdaches;
- Fig. 2: in einer Querschnittsansicht senkrecht zur Fahrzeuglängsachse ein nicht zur Erfindunggehörendes
- Fig. 3: in einer Ansicht gemäß Fig. 2 das erfindungsgemässe Dachmodul; und
- Fig. 4: in einer schematischen Darstellung Komponenten des Dachmoduls.

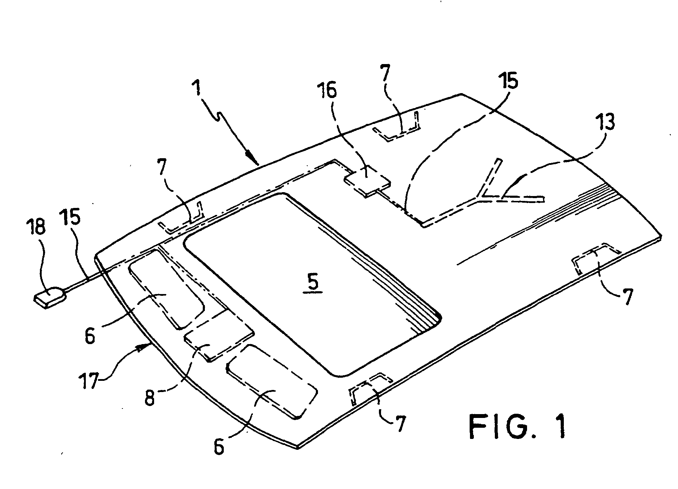

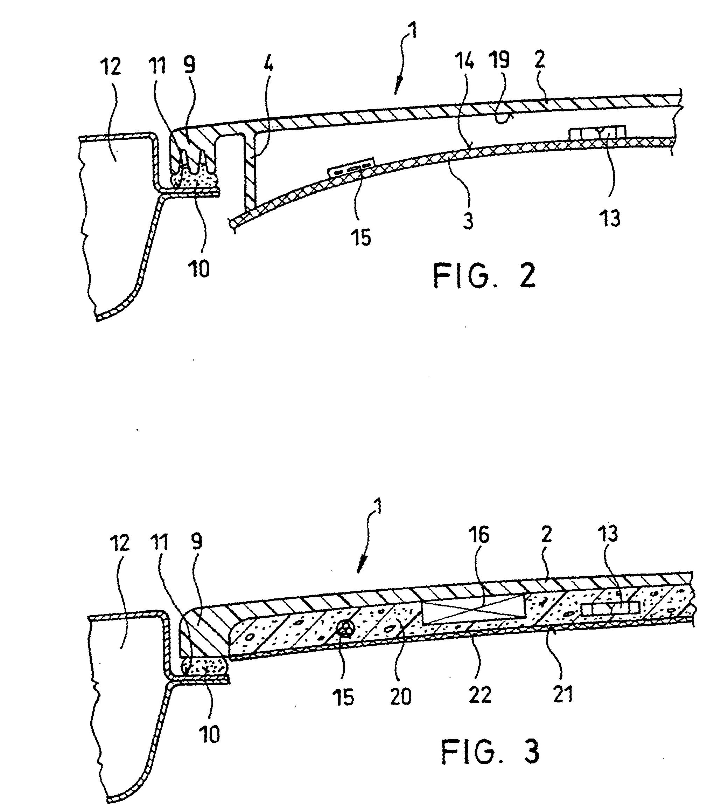

Ein Dachmodul 1 für ein Moduldach eines Kraftfahrzeugs, z. B. eines PKW, enthält eine Dachaußenhaut 2 und einen Himmel 3 als Innenverkleidung des Dachmoduls 1 (siehe Fig. 2). Der Himmel 2 ist beispielsweise über Rippen 4 mit der Dachaußenhaut 2 verbunden. Das Dachmodul 1 enthält des weiteren optional ein Dachöffnungssystem wie z. B. ein Schiebedach 5 (siehe Fig. 1) sowie weitere Anbauteile wie z. B. Sonnenblenden 6, Handgriffe 7 und eine Leucht- und Bedieneinheit 8, mit der z. B. das Schiebedach 5 bedienbar ist. Das Dachmodul 1 bildet als eine vorgefertigte Baueinheit zumindest einen Teil des Daches des Fahrzeugs oder das gesamte Fahrzeugdach, indem es mittels eines seitlichen Dachmodulrandes 9 (Fig. 2) und einer Verklebung 10 oder einer sonstigen Befestigung auf einer Anlagefläche 11 an einem rechten und einem linken Seitenholm 12 sowie gegebenenfalls an einem vorderen und einem hinteren Querträger des Dachrahmens des Fahrzeugs befestigt wird.

In einer alternativen Gestaltung sind die Antenne 13 und die Elektroleitung 15 sowie die Dachmodulsteuereinheit 16 an der Innenseite 19 der Dachaußenhaut 2 verklebt.

Fig. 3 zeigt das erfindungsgemässe Dachmodul 1, bei dem an die Innenseite 19 der Dachaußenhaut 2 eine Schaumstoffschicht 20 z. B aus Polyurethanschaum angeschäumt ist. In dieser Schaumstoffschicht 20 sind die Antenne 13 oder die Antennen sowie die Dachmodulsteuereinheit 16 und die Elektroleitungen 15 eingeschäumt. An der Unterseite 22 der Schaumstoffschicht 20 kann ein Dekormaterial 22 angebracht sein.

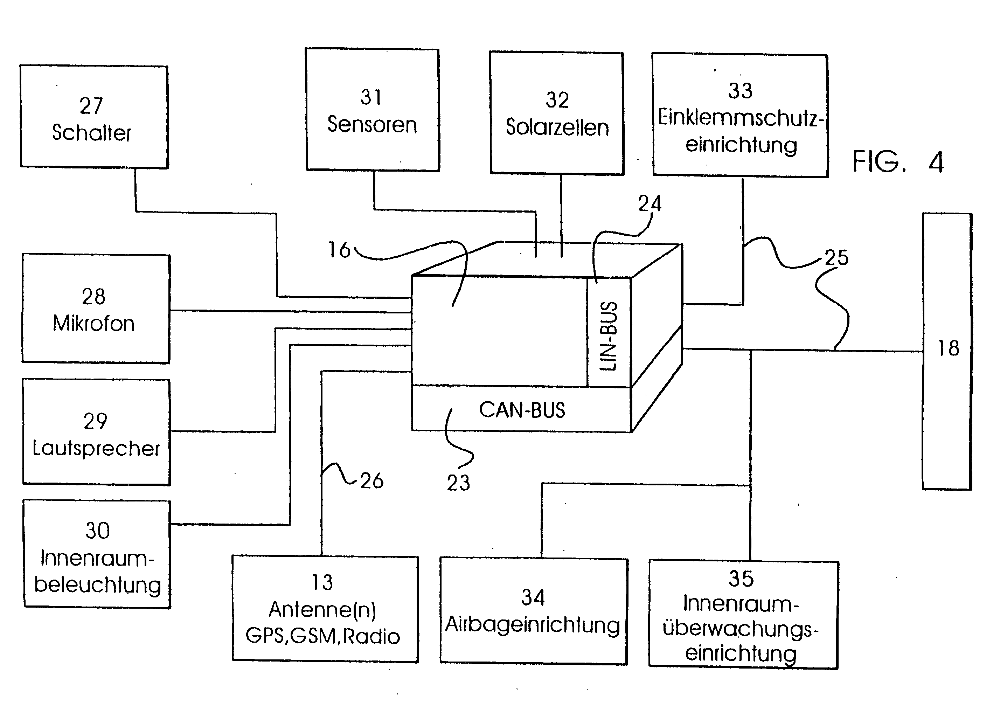

Das Dachmodul 1 kann zusätzliche Einrichtungen mit elektrischen/elektronischen Komponenten aufweisen (siehe Fig. 4), die mit der einen Informations- und Leistungsverteiler bildenden Dachmodulsteuereinheit 16 verbunden sind und über einen Datenbus wie z. B. einen CAN-Bus 23 und/oder über einen LIN-Bus 24 und über eine FPC-Verdrahtung 25 ("flexible printed circuit") und einen Zentralstecker 18 an eine Fahrzeugschnittstelle angeschlossen sind. Die Antennen oder Antennensysteme 13 sind über ein Verbindungsleitung 26, z. B. ein Koaxialkabel oder eine FFC-Verbindung ("flexible flat cable"), an die Dachmodulsteuereinheit 16 bzw. deren Antennenverstärker angeschlössen. Diese Hochfrequenzleitung 26 weist durch die eng benachbarte Anordnung der Antenne an der Dachmodulsteuereinheit 16 eine minimierte Länge auf. CAN, LIN und FPC-Verbindungen sind nur beispielhaft erwähnt, es können auch andere Bussysteme wie VAN-Bus mit FFC verwendet werden. Die Verbindung zwischen der Dachmodulsteuereinheit 16 und dem Zentralstecker 18, die hier beispielhaft eine FPC-Verdrahtung 25 ist, dient somit der Spannungsversorgung, als Steuerleitung und als Verbindung zum fahrzeugeigenen Bussystem.

Die zusätzlichen Einrichtungen können sein: Schalter 27, ein Mikrofon 28 und ein Lautsprecher 29, z. B. für ein Telefon oder für eine Sprachsteuerung von Fahrzeugfunktionen, innenraumbeteuchtung 30, Sensoren 31 wie z. B. für Regen, Geruch usw., Solarzellen 32 einer Solarzelleneinrichtung am Dachmodul, eine Einrichtung 33 zum Einklemmschutz bei einem öffnungsfähigen Dach, z. B. einem Schiebedach, eine Airbageinnchtung 34 wie z. B. ein Kopfairbag, oder Innenraumüberwachungseinrichtungen 35.

Durch Integration dieser Einrichtungen in das vorgefertigte Dachmodul kann dieses als Baueinheit bei reduziertem Endmontageaufwand in das Fahrzeugdach eingebaut werden, wobei die ansonsten vorhandenen Schnittstellen wesentlich reduziert sind.

### Bezugszeichenliste

- 1: Dachmodul
- 2: Dachaußenhaut
- 3: Himmel
- 4: Rippen
- 5: Schiebedach
- 6: Sonnenblende
- 7: Handgriffe
- 8: Leucht- und Bedieneinheit
- 9: Dachmodulrand
- 10: Verklebung
- 11: Anlagefläche
- 12: Seitenholm
- 13: Antenne
- 14: Oberseite
- 15: Elektroleitung
- 16: Dachmodulsteuereinheit
- 17: vorderer Rand
- 18: Zentralstecker
- 19: Innenseite
- 20: Schaumstoffschicht
- 21: Unterseite
- 22: Dekormaterial
- 23: CAN-Bus
- 24: LIN-Bus
- 25: FPC-Verdrahtung
- 26: Verbindungsleitung
- 27: Schalter
- 28: Mikrofon
- 29: Lautsprecher
- 30: Innenraumbeleuchtung
- 31: Sensoren
- 32: Solarzellen
- 33: Einklemmschutzeinrichtung
- 34: Airbageinrichtung
- 35: Innenraumüberwachungseinrichtungen

## Patentansprüche

1. Dachmodul (1) eines Fahrzeugdaches mit einer Dachaußenhaut und einem Himmel (3), bei dem zumindest ein Flächenbereich der Dachaußenhaut (2) aus Kunststoff besteht und bei dem unterhalb dieses Flächenbereichs zumindest eine Antenne (13), insbesondere für Mobilfunk und/oder für Satellitennavigation, zwischen der Dachaußenhaut (2) und dem Himmel (3) angeordnet ist, **dadurch gekennzeichnet, daß** die Antenne mit Verbindungsleiterbahnen oder Elektroleitungen (15) zum Anschließen der Antenne (13) in einer Schaumstoffschicht (20) eingeschäumt ist, die an der Innenseite (19) der Dachaußenhaut (2) angebracht oder angeschäumt ist.

2. Dachmodul nach Anspruch 1, **dadurch gekennzeichnet, daß** die Antenne (13) aus einem Antennendraht oder einer FPC-Verdrahtung gebildet ist.

3. Dachmodul nach Anspruch 1, **dadurch gekennzeichnet, daß** die Antenne (13) aus einem Antennendraht oder einer FPC-Verdrahtung gebildet ist und daß sie insbesondere mit Verbindungsleiterbahnen oder Elektroleitungen auf der Innenseite (19) der Dachaußenhaut (2) oder der Oberseite (14) des Himmels (3) aufgeklebt ist.

4. Dachmodul nach Anspruch 1, **dadurch gekennzeichnet, daß** eine die Antenne (13) bildende Leiterbahn und/oder Verbindungsleiterbahnen zum Anschließen der Antenne (13) auf der Innenseite (19) der Dachaußenhaut (2) oder der Oberseite (14) des Himmels (3) durch Aufdampfen eines leitfähigen Werkstoffs hergestellt sind.

5. Dachmodul nach einem der Ansprüche 1 bis 4, **dadurch gekennzeichnet, daß** eine Dachmodulsteuereinheit (16) im Dachmodul (1) integriert ist.

6. Dachmodul nach Anspruch 5, **dadurch gekennzeichnet, daß** die Dachmodulsteuereinheit (16) einen Antennenverstärker enthält.

7. Dachmodul nach Anspruch 5 oder 6, **dadurch gekennzeichnet, daß** die Dachmodulsteuereinheit (16) nahe benachbart zu der oder zu den Antennen (13) im Dachmodul (1) integriert ist.

8. Dachmodul nach einem der Ansprüche 3 bis 7, **dadurch gekennzeichnet, daß** ein Zwischenraum zwischen der Dachaussenhaut (2) und dem Himmel (3) mit einem Schaumstoff (20) ausgeschäumt ist.

9. Dachmodul nach einem der Ansprüche 1 bis 8, **dadurch gekennzeichnet, daß** eine Datenübertragung von/zu der Antenne (13) über ein Datenbussystem des Fahrzeugs erfolgt.

10. Dachmodul nach einem der Ansprüche 1 bis 9, **dadurch gekennzeichnet, daß** ein Zentralstecker (18) zur Verbindung der Daten- und Stromversorgung des Dachmoduls (1) mit dem Datenbussystem und einer Fahrzeugstromversorgung vorgesehen ist.

11. Dachmodul nach einem der Ansprüche 1 bis 10, **dadurch gekennzeichnet, daß** das Dachmodul (1) zusätzliche elektrische/elektronische Komponenten enthält, die über eine Dachmodulsteuereinheit (16) und den Zentralstecker (18) an das Datenbussystem des Fahrzeugs angeschlossen sind.

12. Dachmodul nach einem der Ansprüche 1 bis 11, **dadurch gekennzeichnet, daß** zwei Antennen (13) am Dachmodul (1) integriert sind.

13. Dachmodul nach Anspruch 12, **dadurch gekennzeichnet, daß** eine Antenne (13) an der Dachaußenhaut (2) und eine Antenne (13) am Himmel (3) angebracht ist.

14. Dachmodul nach einem der Ansprüche 1 bis 13, **dadurch gekennzeichnet, daß** ein Dachöffnungssystem (5), insbesondere ein Schiebedach, in das Dachmodul (1) integriert ist.

15. Dachmodul nach einem der Ansprüche 1 bis 14, **dadurch gekennzeichnet, daß** zusätzlich eine Radioantenne an dem Dachmodul (1) integriert ist.

16. Dachmodul nach einem der Ansprüche 1 bis 15, **dadurch gekennzeichnet, daß** es als vorgefertigte, komplettierte Baueinheit an einem Dachrahmen des Fahrzeugs befestigt ist.

## Claims

1. Roof module (1) for a vehicle roof having an outer roof skin and a headlining (3), in which at least one surface area of the outer roof skin (2) consists of plastic and in which, underneath this surface area, at least one antenna (13), in particular for mobile radio and/or for satellite navigation, is arranged between the outer roof skin (2) and the headlining (3), **characterized in that** the antenna, together with connecting conductor tracks or electrical leads (15) for the connection of the antenna (13), is incorporated in a foam layer (20) which is applied to or foamed onto the inside (19) of the outer roof skin (2).

2. Roof module according to Claim 1, **characterized in that** the antenna (13) is formed from an antenna wire or FPC wiring.

3. Roof module according to Claim 1, **characterized in that** the antenna (13) is formed from an antenna wire or FPC wiring and **in that**, in particular together with connecting conductor tracks or electrical leads, it is adhesively bonded onto the inside (19) of the outer roof skin (2) or the upper side (14) of the headlining (3).

4. Roof module according to Claim 1, **characterized in that** a conductor track forming the antenna (13) and/or connecting conductor tracks for connecting the antenna (13) are produced on the inside (19) of the outer roof skin (2) or the upper side (14) of the headlining (3) by means of vapour deposition of a conductive material.

5. Roof module according to one of Claims 1 to 4, **characterized in that** a roof module control unit (16) is integrated in the roof module (1).

6. Roof module according to Claim 5, **characterized in that** the roof module control unit (16) contains an antenna amplifier.

7. Roof module according to Claim 5 or 6, **characterized in that** the roof module control unit (16) is integrated in the roof module (1) closely adjacent to the antenna or antennas (13).

8. Roof module according to one of Claims 3 to 7, **characterized in that** an interspace between the outer roof skin (2) and the headlining (3) is filled with a foam (20).

9. Roof module according to one of Claims 1 to 8, **characterized in that** data transmission from/to the antenna (13) is carried out via a data bus system belonging to the vehicle.

10. Roof module according to one of claims 1 to 9, **characterized in that** a central plug (18) is provided to connect the data and power supply of the roof module (1) to the data bus system and a vehicle power supply.

11. Roof module according to one of Claims 1 to 10, **characterized in that** the roof module (1) contains additional electric/electronic components, which are connected to the data bus system of the vehicle via a roof module control unit (16) and the central plug (18).

12. Roof module according to one of Claims 1 to 11, **characterized in that** two antennas (13) are integrated in the roof module (1).

13. Roof module according to Claim 12, **characterized in that** one antenna (13) is fitted to the outer roof skin (2) and one antenna (13) to the headlining (3).

14. Roof module according to one of Claims 1 to 13, **characterized in that** a roof opening system (5), in particular a sliding roof, is integrated into the roof module (1).

15. Roof module according to one of Claim 1 to 14, **characterized in that** in addition a radio antenna is integrated in the roof module (1).

16. Roof module according to one of Claim 1 to 15, **characterized in that** it is fitted to a roof frame of the vehicle as a prefabricated, completed structural unit.

## Revendications

1. Module de toit (1) pour le toit d'un véhicule automobile, comprenant une membrane extérieure de toit et un habillage de plafond (3), dans lequel au moins une zone de la surface de la membrane extérieure (2) est réalisée en matière plastique et dans lequel au moins une antenne (13), en particulier pour le service radiotéléphonique et/ou pour la navigation par satellites, est agencée en dessous de cette zone de la surface entre la membrane extérieure (2) du toit et l'habillage de plafond (3), **caractérisé en ce que** l'antenne, avec les pistes d'interconnexion ou les lignes électriques (15) pour le branchement de l'antenne (13), est insérée au cours d'un processus de moussage dans une couche de mousse synthétique (20), qui est agencée ou appliquée par moussage contre la face intérieure (19) de la membrane extérieure (2) du toit.

2. Module de toit selon la revendication 1, **caractérisé en ce que** l'antenne (13) est formée par un fil d'antenne ou un câblage de circuits imprimés souples.

3. Module de toit selon la revendication 1, **caractérisé en ce que** l'antenne (13) est formée par un fil d'antenne ou un câblage de circuits imprimés souples et **en ce que** ladite antenne, en particulier avec des pistes d'interconnexion ou des lignes électriques, est collée sur la face intérieure (19) de la membrane extérieure (2) du toit ou sur la face supérieure (14) de l'habillage de plafond (3).

4. Module de toit selon la revendication 1, **caractérisé en ce qu'**une piste conductive formant l'antenne (13) et/ou des pistes d'interconnexion, destinées au branchement de l'antenne (13) sur la face intérieure (19) de la membrane extérieure (2) ou sur la face supérieure (14) de l'habillage de plafond (3), sont réalisées par métallisation sous vide d'un matériau conducteur.

5. Module de toit selon l'une quelconque des revendications 1 à 4, **caractérisé en ce qu'**une unité de commande du module de toit (16) est intégrée dans le module de toit (1).

6. Module de toit selon la revendication 5, **caractérisé en ce que** l'unité de commande du module de toit (16) comporte un amplificateur d'antenne.

7. Module de toit selon la revendication 5 ou 6, **caractérisé en ce que** l'unité de commande du module de toit (16) est intégrée dans le module de toit (1), à proximité immédiate de ou des antennes (13).

8. Module de toit selon l'une quelconque des revendications 3 à 7, **caractérisé en ce qu'**un espace intermédiaire entre la membrane extérieure (2) du toit et l'habillage de plafond (3) est comblé au cours d'un processus de moussage avec une mousse synthétique (20).

9. Module de toit selon l'une quelconque des revendications 1 à 8, **caractérisé en ce qu'**une transmission de données à partir de /vers l'antenne (13) est effectuée par l'intermédiaire d'un système de bus de données du véhicule.

10. Module de toit selon l'une quelconque des revendications 1 à 9, **caractérisé en ce qu'**il est prévu une prise centrale (18) destinée à raccorder la ligne de transmission de données et la ligne d'alimentation électrique du module de toit (1) avec le système de bus de données et une ligne d'alimentation électrique du véhicule.

11. Module de toit selon l'une quelconque des revendications 1 à 10, **caractérisé en ce que** le module de toit (1) comporte des composants électriques / électroniques supplémentaires, qui sont raccordés au système de bus de données du véhicule par l'intermédiaire d'une unité de commande du module de toit (16) et la prise centrale (18).

12. Module de toit selon l'une quelconque des revendications 1 à 11, **caractérisé en ce que** deux antennes (13) sont intégrées dans le module de toit (1).

13. Module de toit selon la revendication 12, **caractérisé en ce qu'**une antenne (13) est agencée au niveau de la membrane extérieure du toit (2) et une antenne (13) est agencée au niveau de l'habillage de plafond (3).

14. Module de toit selon l'une quelconque des revendications 1 à 13, **caractérisé en ce qu'**un système d'ouverture du toit (5), en particulier un toit coulissant, est intégré dans le module de toit (1).

15. Module de toit selon l'une quelconque des revendications 1 à 14, **caractérisé en ce qu'**une antenne radio est intégrée en plus dans le module de toit (1).

16. Module de toit selon l'une quelconque des revendications 1 à 15, **caractérisé en ce qu'**il est fixé sous forme d'unité préfabriquée, complète contre un cadre du toit.
